# EUROPEAN PATENT APPLICATION

(11) **EP 4 421 351 A1**
(43) Date of publication of application: **28.08.2024**
(21) Application number: 23158596.9
(22) Date of filing: 24.02.2023
(51) Int. Cl.: F16H 49/00

(54) **STRAIN WAVE GEAR**

(71) Applicant: Goodrich Actuation Systems Limited, Wolverhampton, West Midlands WV10 7EH (GB)
(72) Inventor: HOLMAN, David John, Wolverhampton (GB); WHITFIELD, Neil Stuart, Shifnal (GB)
(74) Representative: Dehns

(57) **Abstract**

A strain wave gear comprising: a wave generator configured to contact a spline, the wave generator being rotatable; and a coupler configured to couple a driver shaft to the wave generator, the coupler permitting displacement of the driver shaft relative to the wave generator.

## Description

This disclosure relates to strain wave gears.

### BACKGROUND

Strain wave gears in aircraft can be used to transmit torque from a motor to a control surface, e.g. in doors, flaps and/or spoilers. However, due to the stacking of radial tolerances within a strain wave gear, essential clearances between moving parts of the gear can be lost. These clearances are very small so that even low values of runout on high precision parts can lead to loss of rotation and/or jamming.

### SUMMARY

According to a first aspect, there is provided a strain wave gear comprising: a wave generator configured to contact a spline, the wave generator being rotatable; and a coupler configured to couple a driver shaft to the wave generator, the coupler permitting displacement of the driver shaft relative to the wave generator. By allowing the driver shaft to displace relative to the wave generator, the strain wave gear is provided with a clearance that can accommodate eccentric runout and thereby prevent loss of rotation of the strain wave gear and/or jamming of the strain wave gear.

The coupler may permit displacement of the driver shaft relative to the wave generator in a radial direction.

The strain wave gear may further comprise a coupling frame positioned between the wave generator and the coupler. The coupling frame may permit displacement of the driver shaft relative to the wave generator and/or the coupler.

The coupling frame may permit displacement of the driver shaft relative to the wave generator and/or the coupler in a direction perpendicular to the displacement permitted by the coupler. This provides the strain wave gear with clearances in two directions that can accommodate eccentric runout as the driver shaft rotates.

The coupler and/or coupling frame may permit displacement of the driver shaft relative to the wave generator by sliding along a major axis and/or a minor axis of the strain wave gear.

One of the coupler and the coupling frame may permit displacement of the driver shaft relative to the wave generator by sliding along a major axis of the strain wave gear. Additionally, or alternatively, the one of the coupler and the coupling frame may be fixed relative to the wave generator along a minor axis of strain wave gear.

The other of the coupler and the coupling frame may permit displacement of the driver shaft relative to the wave generator by sliding along a minor axis of the strain wave gear. Additionally, or alternatively, the other of the coupler and the coupling frame may be fixed relative to the wave generator along a major axis of the strain wave gear.

The strain wave gear may further comprise a low friction element positioned between the coupler and the coupling frame and/or the coupling frame and the wave generator. The low friction element may permit the coupler and/or coupling frame to slide relative to the wave generator. This can reduce frictional forces between the coupler and the coupling frame and/or the coupling frame and the wave generator.

The low friction element may comprise a ball bearing or a low friction coating.

The coupler and/or coupling frame may have a major axis and a minor axis. The major axis of the coupler and/or coupling frame may be aligned with a major axis of the wave generator, and the minor axis of the coupler and/or coupling frame may be aligned with a minor axis of the wave generator.

The coupler and/or coupling frame may have a square or rectangular cross-sectional shape.

The coupler and/or coupling frame may have curved or bevelled edges. Additionally, or alternatively, a portion of the coupler may be recessed relative to the coupling frame and/or a portion of the coupling frame may be recessed relative to the wave generator. These arrangements may reduce contact between the coupler and coupling frame and/or coupling frame and wave generator, and thereby reduce frictional losses.

The coupler and coupling frame may form a two-dimensional misalignment coupling.

The strain wave gear may further comprise an output spline, and a flex spline coupled to the output spline. The wave generator may be configured to contact the flex spline.

The flex spline may be coupled to one or more further output splines. Each output spline may be coupled to the flex spline independently of the other output splines.

The strain wave gear may further comprise a motor coupled to the wave generator via the driver shaft. The motor may be configured to rotate the wave generator.

In another aspect of the present invention, there is provided an aircraft comprising a strain wave gear as described above.

The present invention will be further described and explained by way of example with reference to the accompanying drawings in which:
Fig. 1 shows a front cross-sectional view of a strain wave gear; and
Fig. 2 shows a side cross-sectional view of a strain wave gear.

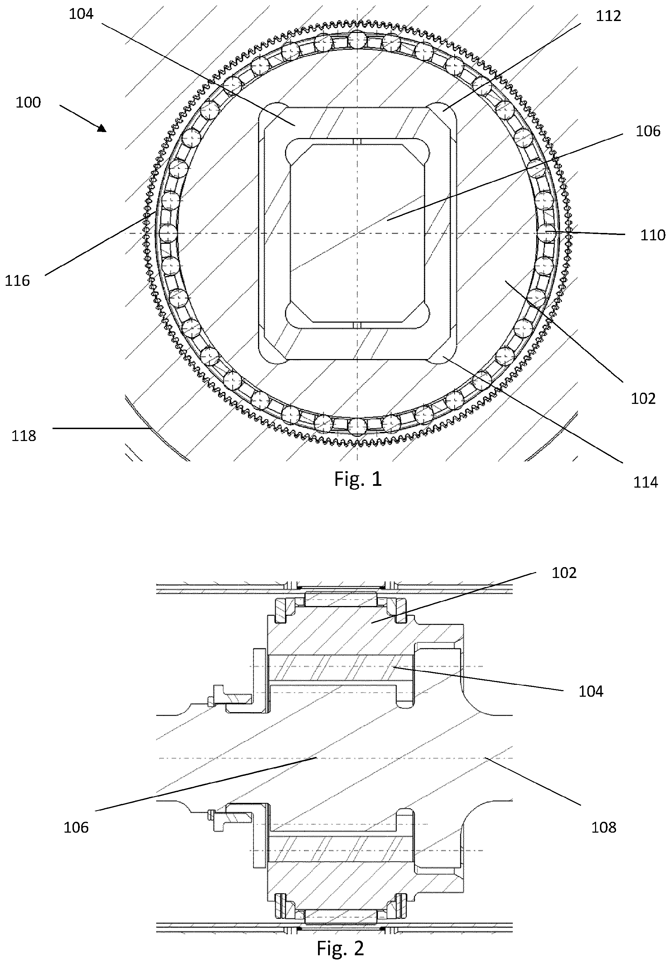

With reference to Figs. 1-2, a strain wave gear 100 comprises a wave generator 102, a coupler 106, a coupling frame 104, a flex spline 116, and an output (e.g. circular) spline 118. The coupler 106 forms part of a driver shaft 108 which drives the wave generator 102 to rotate. The driver shaft 108 is coupled to the wave generator 102 at the coupler 106.

The wave generator 102 is formed of a hub and a ball bearing 110. The hub is elliptical in cross-section and comprises an aperture 112 shaped to accommodate a coupling frame 104 and a coupler 106. The ball bearing 110 is raced and surrounds the hub, conforming to the shape of the hub. As such, the wave generator 102 has an elliptical cross-sectional profile.

The coupling frame 104 is positioned in the aperture 112 of the wave generator 102 and the coupler 106 is positioned in an aperture 114 of the coupling frame 104. Each of the coupling frame 104 and coupler 106 permits the driver shaft 108 to displace relative to the wave generator 102. This displacement is in a radial direction, i.e. perpendicular to an axis of the strain wave gear.

The flex spline 116 comprises a cylindrical section having a flexible radial wall. This arrangement allows the flex spline 116 to conform to the shape of the wave generator 102, which is positioned within the flex spline 116, i.e. within the cylindrical section, and which contacts the radial wall. As such, the flex spline 116 is fixed relative to the wave generator 102 (unless the strain wave gear is a compound strain wave gear).

The flex spline 116 also comprises a plurality of teeth arranged along an outer surface of the flex spline 116. The plurality of teeth allows the flex spline 116 to be coupled to the output spline 118.

The output spline 118 comprises a rigid ring having a plurality of teeth arranged along the inner surface of the ring. These teeth are configured to engage the plurality of teeth arranged on the outer surface of the flex spline 116. The output spline 118 may have 2 more teeth than the flex spline 116 when the wave generator 102 has two lobes. In some embodiments, the output spline 118 is configured to rotate relative to the flex spline 116.

Since the wave generator 102 has an elliptical cross-sectional profile, the teeth of the output spline 118 only engage the teeth of the flex spline 116 at either end of the major axis of the wave generator 102. This may allow the output spline 118 to rotate relative to the wave generator 102. However, due to the stacking of radial tolerances within the strain wave gear 100, the tip-to-tip clearance between the teeth of the output spline 118 and the teeth of the flex spline 116 at either end of the minor axis can become lost.

By providing a coupler 106 and coupling frame 104 that allow the driver shaft 108 to displace relative to the wave generator 102, the strain wave gear is provided with clearances in two directions that can accommodate eccentric runout and thereby prevent any loss of rotation and/or jamming of the strain wave gear 100. As such, the wave generator 102 is able to follow the output spline 118 at the major axis independently of the radial tolerance stack, while the tip-to-tip clearances at the minor axis are maintained and are no longer influenced by the radial tolerance stack.

Unlike the wave generator 102, the coupler 106 does not have an elliptical cross-sectional profile. Instead, the coupler 106 is substantially rectangular in cross-section, and may have bevelled edges. Preferably, a major axis of the coupler 106 is aligned with a major axis of the wave generator 102, and a minor axis of the coupler 106 is aligned with a minor axis of the wave generator 104. Alternatively, the major and minor axes of the coupler 106 may be angled with respect to the major and minor axes of the wave generator 102. Other cross-sectional profiles which have a major axis and a minor axis may also be considered for the coupler 106. For example, the coupler 106 may comprise a square cross-section.

The aperture 114 is sized larger than the coupler 106 in a first direction so that there is space either side of the coupler 106 in the first direction. This allows the coupler 106 to slide within the wave generator 102 in the first direction, which in turn permits the driver shaft 108 to displace relative to the wave generator 102 in the first direction.

By allowing the driver shaft 108 to displace relative to the wave generator 102 in the first direction, the strain wave gear is provided with a clearance in the first direction that can accommodate eccentric runout in the first direction as the driver shaft rotates.

The aperture 114 may comprise the same cross-sectional profile as the coupler 106. However, in other embodiments, the aperture 114 may have a cross-sectional profile that optimizes contact between the coupler 106 and coupling frame 104 for friction and load.

The strain wave gear 100 may comprise a low friction element positioned between the coupler 106 and the coupling frame 104 in the first direction so that the coupler 106 can slide relative to the coupling frame 104. This may reduce frictional losses between the coupler 106 and the coupling frame 104. In some embodiments, the low friction element may be a ball bearing. Alternatively, the low friction element may be a low frictional coating.

In these embodiments, movement of the coupler 106 is constrained in a second direction by the coupling frame 104, i.e. the coupler 106 is fixed in the second direction. However, in other embodiments, the coupler 106 may be configured to slide in the second direction and may be constrained in the first direction.

Alternatively, the aperture 114 may be sized larger than the coupler 106 in both the first and second direction so that there is space either side of the coupler 106 in the first and second direction. This may allow the coupler 106 to slide within the wave generator 102 in the first and second direction, which in turn may permit the driver shaft 108 to displace relative to the wave generator 102 in the first and second direction.

In a similar manner to the coupler 106, the coupling frame 104 has a substantially rectangular cross-sectional profile, and may have bevelled edges. Preferably, a major axis of the coupling frame 104 is aligned with the major axis of the wave generator 102, and a minor axis of the coupling frame 104 is aligned with the minor axis of the wave generator 102. Alternatively, the major and minor axes of the coupling frame 104 may be angled with respect to the major and minor axes of the wave generator 102. As with the coupler 106, other cross-sectional profiles which have a major axis and a minor axis may also be considered for the coupling frame 104. For example, the coupling frame 104 may comprise a square cross-section. However, preferably, the coupling frame 104 and the coupler 106 have the same cross-sectional profile.

The aperture 112 is sized larger than the coupling frame 104 in the second direction so that there is space either side of the coupling frame 104 in the second direction. This allows the coupling frame 104 to slide within the wave generator 102 in the second direction, which in turn permits the driver shaft 108 to displace relative to the wave generator 102 in the second direction.

By allowing the driver shaft 108 to displace relative to the wave generator 102 in the second direction, the strain wave gear 100 is provided with a clearance in the second direction that can accommodate eccentric runout in the second direction as the driver shaft rotates.

The aperture 112 may comprise the same cross-sectional profile as the coupling frame 114. However, in other embodiments, the aperture 112 may have a cross-sectional profile that optimizes contact between the coupling frame 104 and the wave generator 102 for friction and load.

The strain wave gear 100 may comprise a low friction element positioned between the coupling frame 104 and the wave generator 102 in the second direction so that the coupling frame 104 can slide relative to the wave generator 102. This may reduce frictional losses between the coupling frame 104 and the wave generator 102. In some embodiments, the low friction element may be a ball bearing. Alternatively, the low friction element may be a low frictional coating.

In these embodiments, movement of the coupling frame 104 is constrained in the first direction by the wave generator 102, i.e. the coupling frame 104 is fixed in the first direction. However, in other embodiments, the coupling frame 104 may be configured to slide in the first direction while being constrained in the second direction.

Alternatively, the aperture 112 may be sized larger than the coupling frame 104 in both the first second direction so that there is space either side of the coupling frame 104 in the first and second direction. This may allow the coupling frame 104 to slide within the wave generator 102 in the first and second direction, which in turn may permit the driver shaft 108 to displace relative to the wave generator 102 in the first and second direction.

The first direction and second direction are radial directions, i.e. perpendicular to an axis of the strain wave gear. Preferably, the first direction is perpendicular to the second direction. In some embodiments, the first direction is along the major axis of the strain wave gear 100, and the second direction is along a minor axis of the strain wave gear 100.

Although not shown, the strain wave gear also comprises a motor coupled to the driver shaft 108. The motor is configured to rotate the driver shaft 108, which in turn leads to a rotation of the wave generator 102 via the coupler 106 and coupling frame 104. The rotation of the wave generator 102 causes the output spline 118 to rotate. Since the flex spline 116 is fixed relative to the wave generator 102 and has fewer teeth than the output spline 118, the output spline rotates at a slower speed than the wave generator 102.

In some embodiments, the flex spline 116 may be coupled to more than one output spline. The coupling of each of these output splines to the flex spline 116 may be independent of each of the other output splines.

The components of the strain wave gear 100 may be formed of 300M steel, or a similar material which exhibits high hardness and high strength. In some embodiments, the strain wave gear 100 may be lubricated with oil when used in extreme pressure.

Various aspects of the strain wave gear disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A strain wave gear comprising:
a wave generator configured to contact a spline, the wave generator being rotatable; and
a coupler configured to couple a driver shaft to the wave generator, the coupler permitting displacement of the driver shaft relative to the wave generator.

2. A strain wave gear as claimed in claim 1, further comprising a coupling frame positioned between the wave generator and the coupler, the coupling frame permitting displacement of the driver shaft relative to the wave generator and/or the coupler.

3. A strain wave gear as claimed in claim 2, wherein the coupling frame permits displacement of the driver shaft relative to the wave generator and/or the coupler in a direction perpendicular to the displacement permitted by the coupler.

4. A strain wave gear as claimed in claim 2 or 3, wherein the coupler and/or coupling frame permits displacement of the driver shaft relative to the wave generator by sliding along a major axis and/or a minor axis of the strain wave gear.

5. A strain wave gear as claimed in claim 2 or 3, wherein one of the coupler and the coupling frame permits displacement of the driver shaft relative to the wave generator by sliding along a major axis of the strain wave gear and/or is fixed relative to the wave generator along a minor axis of strain wave gear.

6. A strain wave gear as claimed in claim 5, wherein the other of the coupler and the coupling frame permits displacement of the driver shaft relative to the wave generator by sliding along a minor axis of the strain wave gear and/or is fixed relative to the wave generator along a major axis of the strain wave gear.

7. A strain wave gear as claimed in claims 5 or 6, further comprising a low friction element positioned between the coupler and the coupling frame and/or the coupling frame and the wave generator, the low friction element permitting the coupler and/or coupling frame to slide relative to the wave generator.

8. A strain wave gear as claimed in any of claims 3-7, wherein the coupler and/or coupling frame has a major axis and a minor axis, the major axis of the coupler and/or coupling frame being aligned with a major axis of the wave generator, and the minor axis of the coupler and/or coupling frame being aligned with a minor axis of the wave generator.

9. A strain wave gear as claimed in any of claims 3-8, wherein the coupler and/or coupling frame has a square or rectangular cross-sectional shape.

10. A strain wave gear as claimed in any of claims 3-9, wherein the coupler and/or coupling frame has curved and/or bevelled edges.

11. A strain wave gear as claimed in any of claims 3-10, wherein the coupler and coupling frame form a two-dimensional misalignment coupling.

12. A strain wave gear as claimed in any preceding claim, further comprising:
an output spline; and
a flex spline coupled to the output spline;
wherein the wave generator is configured to contact the flex spline.

13. A strain wave gear as claimed in claim 12, wherein the flex spline is coupled to one or more further output splines, each output spline being coupled to the flex spline independently of the other output splines.

14. A strain wave gear as claimed in claim 12 or 13, further comprising a motor coupled to the wave generator via the driver shaft, the motor being configured to rotate the wave generator.

15. An aircraft comprising a strain wave gear as claimed in any preceding claim.
